# FASCICULE DE BREVET EUROPEEN

(11) **EP 4 467 461 B1**
(45) Date de publication et mention de la délivrance du brevet: **02.07.2025**
(21) Numéro de dépôt: 24175736.8
(22) Date de dépôt: 14.05.2024
(51) Int. Cl.: B64D 27/40, B64D 27/12, B64D 27/18

(54) **ENSEMBLE POUR UN AÉRONEF COMPORTANT UNE AILE ET UN MÂT RÉACTEUR POUR COUPLER UN SYSTÈME DE PROPULSION À LADITE AILE**
ANORDNUNG FÜR EIN FLUGZEUG MIT EINEM FLÜGEL UND EINEM TRIEBWERKMAST ZUR KOPPLUNG EINES ANTRIEBSSYSTEMS AN DEN FLÜGEL
ASSEMBLY FOR AN AIRCRAFT COMPRISING A WING AND A JET ENGINE PYLON FOR COUPLING A PROPULSION SYSTEM TO SAID WING

(30) Priorité: 23.05.2023 FR 2305084
(43) Date de publication de la demande: 27.11.2024
(73) Titulaire: AIRBUS OPERATIONS (S.A.S.), 31060 Toulouse (FR)
(72) Inventeur: PAUTIS, Olivier, 31060 TOULOUSE (FR); COMBES, Pierre-Antoine, 31060 TOULOUSE (FR); DE NICOLA, Marc, 31060 TOULOUSE (FR)
(74) Mandataire: Airbus-OPS SAS

(56) Documents cités:
- EP-A1- 3 992 087
- EP-B1- 0 115 914
- GB-A- 2 010 969
- US-A1- 2015 251 768

## Description

### DOMAINE TECHNIQUE

La présente invention concerne un ensemble pour un aéronef qui comporte une aile et un mât réacteur pour coupler un système de propulsion à l'aile, ainsi qu'un aéronef comportant un système de propulsion et un tel ensemble pour coupler le système de propulsion à l'aile.

L'état de la technique est illustré par le document US 2015/0251768 A1.

### ÉTAT DE LA TECHNIQUE ANTÉRIEURE

Habituellement, pour un aéronef, un ensemble de propulsion comporte par exemple un turboréacteur qui est fixé à une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur aux moyens d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise fixées entre le turboréacteur et la structure primaire du mât, pour absorber les forces de poussée générées par le turboréacteur.

Le mât réacteur est en outre fixé à la structure de l'aile à l'aide d'une embase de fixation. Plus précisément, l'embase de fixation présente une forme sensiblement en U inversé et est destinée à recevoir l'extrémité arrière du caisson. L'embase porte également les attaches du mât réacteur pour solidariser ce dernier à la structure de l'aile à l'aide de ferrures à travers lesquelles les efforts provenant du turboréacteur transitent vers la structure de l'aile.

Bien que les installations actuelles donnent satisfaction, la taille des turboréacteurs augmente mais il n'est pas préférable de modifier les dimensions du train d'atterrissage de sorte à modifier la hauteur de l'aile par rapport au sol pour des raisons de pénalités de masse et d'encombrement. Or, le caisson présente des dimensions relativement importantes qui rendent difficile le positionnement du turboréacteur sous l'aile.

Il est donc nécessaire de fournir une solution assurant une installation optimale des turboréacteurs sous les ailes de l'aéronef.

### EXPOSÉ DE L'INVENTION

Un objet de la présente invention est de proposer un ensemble pour un aéronef comportant une aile et un mât réacteur pour coupler un système de propulsion à l'aile et qui comporte des moyens de fixation à l'aile qui permettent de diminuer l'encombrement du mât réacteur tout en assurant un transfert optimisé des efforts vers la structure de l'aile.

À cet effet, est proposé un ensemble pour le montage sur un aéronef d'un système de propulsion présentant un plan médian vertical, ledit ensemble comportant :
- une aile avec un longeron avant, un panneau d'extrados fixé en partie haute dudit longeron avant et un panneau d'intrados fixé en partie basse dudit longeron avant, où le longeron avant porte une première ferrure au niveau du plan médian vertical, où le panneau d'intrados porte deux deuxièmes ferrures tribord et bâbord au niveau d'une partie basse dudit longeron avant, et où l'intrados porte une troisième ferrure positionnée à l'arrière des deuxièmes ferrures tribord et bâbord,
- un mât réacteur comportant une structure primaire,
- une manille fixée par une cinquième liaison à ladite troisième ferrure dudit intrados, ladite cinquième liaison présentant au moins un degré de liberté en rotation,
- une première et une deuxième bielles, où une première extrémité de chaque première et deuxième bielles est fixée à la manille respectivement par une troisième et une quatrième liaisons pivot,
- une troisième bielle, où une première extrémité est fixée à la première ferrure par une septième liaison, ladite septième liaison présentant au moins un degré de liberté en rotation, et
- une embase de fixation comportant un corps solidaire d'une partie arrière de la structure primaire.

Ledit corps comporte deux premières chapes de fixation tribord et bâbord s'étendant à l'arrière et en partie haute sur les côtés de ladite embase de fixation, chacune desdites premières chapes de fixation étant fixée à une desdites deuxièmes ferrures par une première liaison pivot.

Ledit corps comporte aussi deux deuxièmes chapes de fixation tribord et bâbord s'étendant à l'arrière et en partie basse sur les côtés de ladite embase de fixation, chacune desdites deux deuxièmes chapes de fixation étant fixée par une deuxième liaison à une deuxième extrémité respectivement de la première et de la deuxième bielles. Ladite deuxième liaison présente au moins un degré de liberté en rotation.

Ledit corps comporte en outre au moins une troisième chape de fixation centrale s'étendant à l'arrière et au niveau du plan médian vertical, ladite troisième chape de fixation centrale étant fixée à une deuxième extrémité de ladite troisième bielle par une sixième liaison, ladite sixième liaison présentant au moins un degré de liberté en rotation.

L'ensemble comporte une quatrième ferrure tribord et une quatrième ferrure bâbord, chacune desdites quatrièmes ferrures étant fixée à la structure primaire du mât réacteur. Pour chaque quatrième ferrure, l'ensemble comporte une quatrième bielle dont une première extrémité est fixée à ladite quatrième ferrure par une huitième liaison pivot.

En outre, ledit corps comporte deux quatrièmes chapes de fixation tribord et bâbord s'étendant à l'avant et en partie basse sur les côtés de ladite embase de fixation, chacune desdites quatrièmes chapes de fixation étant fixée à une deuxième extrémité d'une quatrième bielle par une neuvième liaison pivot.

Avec un tel mât réacteur, les efforts du moteur qui sont transportés par la structure primaire du mât sont transmis directement aux panneaux d'extrados et d'intrados via l'embase de fixation. De plus, la mise en œuvre des quatrièmes bielles reliant la structure primaire du mât réacteur à l'embase de fixation permet de réduire les dimensions de la structure primaire du mât réacteur, permettant et facilitant ainsi la fixation de turboréacteur de dimensions supérieures à l'aile de l'aéronef.

Avantageusement, ladite structure primaire comporte un longeron supérieur, un longeron inférieur et deux panneaux latéraux tribord et bâbord reliant les deux longerons, lesdites quatrièmes ferrures étant fixées de part et d'autre de ladite structure primaire en partie basse desdits panneaux latéraux.

Selon un aspect particulier, ledit corps comporte une première partie de corps en forme de U inversé s'étendant à l'intérieur d'une deuxième partie de corps en forme de U inversé, où la partie arrière de la structure primaire est fixée dans la première partie de corps, et où les deux premières chapes de fixation, les deux deuxièmes chapes de fixation et les deux quatrièmes chapes de fixation sont solidaires de la deuxième partie de corps.

Selon un autre aspect particulier, ladite première partie de corps s'étend à l'intérieur de ladite deuxième partie de corps, ladite première partie de corps et ladite deuxième partie de corps s'étendant dans un même plan, parallèle au plan vertical.

Selon encore un autre aspect particulier, ledit corps comporte au moins une nervure de renfort reliant ladite première partie de corps et ladite deuxième partie de corps.

Selon un aspect particulier, ladite partie arrière de la structure primaire solidaire de ladite embase de fixation présente une hauteur mesurée selon la direction verticale entre lesdits longerons supérieur et inférieur et une largeur mesurée selon la direction transversale entre lesdits panneaux latéraux, et ladite embase de fixation présente une hauteur mesurée entre la projection orthogonale d'un axe d'une deuxième liaison de ladite deuxième chape de fixation et un axe d'une sixième liaison de ladite troisième chape de fixation et une largeur mesurée selon la direction transversale entre lesdites deux premières chapes de fixation, la hauteur de ladite structure primaire étant inférieure à la hauteur de ladite embase de fixation et la largeur de ladite structure primaire étant inférieure à la largeur de ladite embase de fixation .

Selon un aspect particulier, ladite première partie de corps de ladite embase de fixation comporte une première excroissance bâbord et une première excroissance tribord s'étendant verticalement dans un plan globalement perpendiculaire au plan médian vertical, lesdites premières excroissances étant disposées de part et d'autre de ladite structure primaire en partie haute desdits panneaux latéraux. Pour la première excroissance bâbord, l'ensemble comporte une première biellette dont une première extrémité est fixée à ladite première excroissance par une dixième liaison pivot. Pour la première excroissance tribord, l'ensemble comporte une deuxième biellette dont une première extrémité est fixée à ladite première excroissance tribord par une onzième liaison pivot. Lesdites deuxièmes ferrures bâbord et tribord comportent respectivement une deuxième excroissance bâbord et une deuxième excroissance tribord s'étendant verticalement dans un plan globalement perpendiculaire au plan médian vertical, lesdites deuxièmes excroissances s'étendant en partie basse des deuxièmes ferrures, la deuxième excroissance tribord étant fixée à une deuxième extrémité de ladite première biellette par une onzième liaison pivot et ladite deuxième excroissance bâbord étant fixée à une deuxième extrémité de ladite deuxième biellette par une onzième liaison pivot.

Selon un autre aspect particulier, lesdites dixième et onzième liaisons pivot présentent un axe de liaison ajusté et au moins une desdites douzième et treizième liaisons pivot présente un axe de liaison comportant un jeu.

Selon un aspect particulier, lesdites deuxième, quatrième, cinquième et sixième liaisons sont des liaisons pivot ou des liaisons rotule.

L'invention propose également un aéronef comportant un système de propulsion et un ensemble tel que décrit précédemment, où le système de propulsion est fixé au mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention ;
[Fig. 2] est une vue en perspective d'un ensemble selon un mode de réalisation de l'invention ;
[Fig. 3] est une vue de côté de la Fig. 2 ; et
[Fig. 4] est une vue de derrière illustrant partiellement l'ensemble des Figs. 2 et 3.

### EXPOSÉ DÉTAILLÉ D'UN MODE DE RÉALISATION

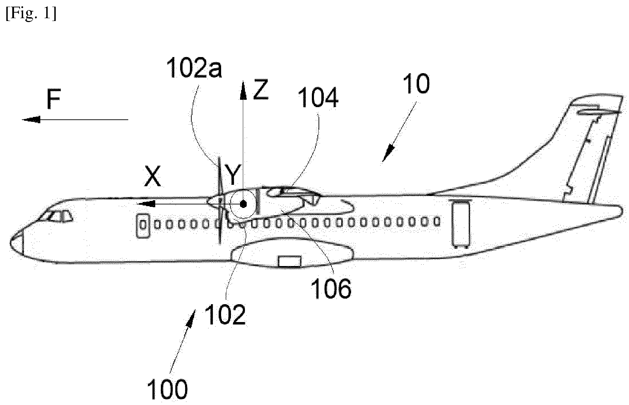

La Fig. 1 montre un aéronef 10 qui comporte un système de propulsion 102, par exemple du type turboréacteur ou turbopropulseur. Le système de propulsion 102 est lié à une aile 104 de l'aéronef 10 par l'intermédiaire d'un mât réacteur 106. L'aile 104 et le mât réacteur 106 forment un ensemble 100 selon l'invention et le système de propulsion 102 est fixé au mât réacteur 106 par tous moyens de fixation appropriés et connus de l'homme du métier tels que ceux divulgués dans le document US-A-2016/0221682.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du système de propulsion 102 et par rapport à la direction d'avancement F de l'aéronef 10 lorsque le système de propulsion 102 fonctionne.

Dans la description qui suit, et par convention, on appelle X la direction longitudinale du système de propulsion qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le mât réacteur 106 et le système de propulsion 102 présentent un plan médian vertical XZ et le système de propulsion 102 est ici un turbopropulseur avec une hélice 102a, mais il pourrait être du type turboréacteur à double flux avec une nacelle.

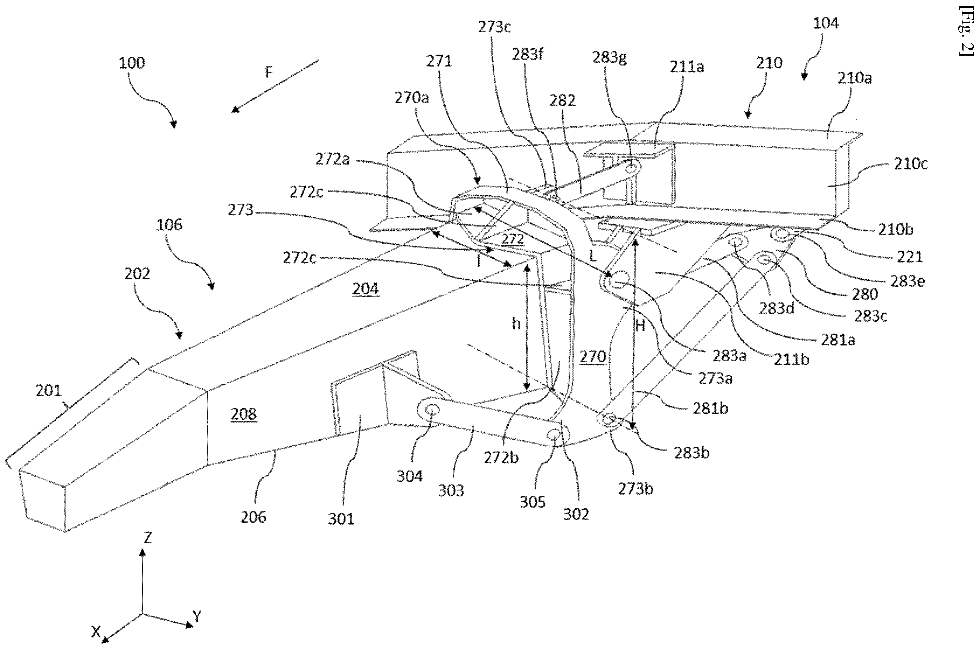

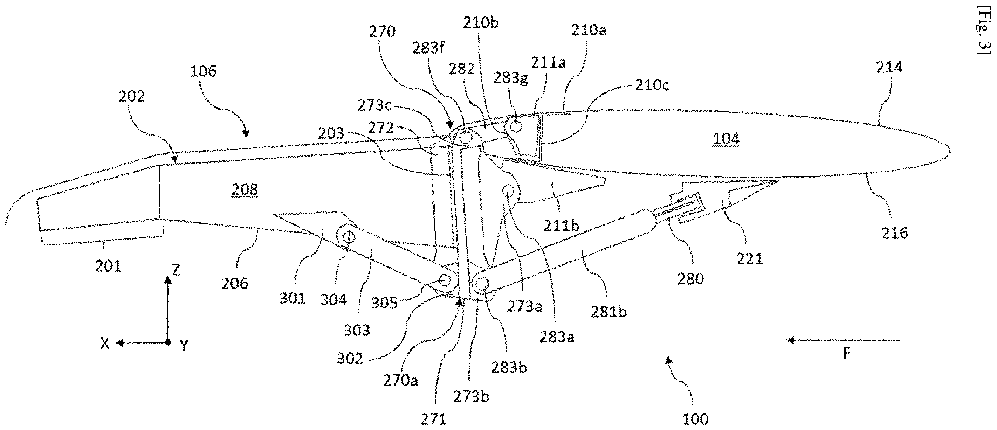

La Fig. 2 montre l'ensemble 100 selon l'invention. Le mât réacteur 106 comprend une structure rigide formant un caisson et également appelée structure primaire 202. La structure primaire 202 est formée d'un longeron supérieur 204, d'un longeron inférieur 206 et de deux panneaux latéraux 208 (seul le panneau bâbord est représenté sur les Figs. 2 et 3) tribord et bâbord reliant les deux longerons 204 et 206.

La forme de la structure primaire 202 est dans cet exemple configurée pour que le mât réacteur 106 présente une pyramide avant 201, située à l'extrémité avant du mât réacteur 106 selon la direction d'avancement F, et une base 203, sensiblement rectangulaire, située à l'extrémité arrière du mât réacteur 106 selon la direction d'avancement F. La base 203 présente une hauteur h mesurée sensiblement selon la direction verticale Z entre les longerons supérieur 204 et inférieur 206 et une largeur 1 mesurée sensiblement selon la direction transversale Y entre les deux panneaux latéraux 208.

La structure de l'aile 104 comporte un longeron avant 210, un panneau d'extrados 214 et un panneau d'intrados 216 qui sont tous les deux fixés au longeron avant 210 et s'étendent globalement dans des plans horizontaux XY.

Bien sûr, pour assurer la rigidité de l'aile, sa structure comporte d'autres éléments tels que des nervures qui sont réparties entre le panneau d'extrados 214 et le panneau d'intrados 216.

Le longeron avant 210 prend ici la forme d'un profilé en forme d'une marche en Z inversé sur les Figs. 2 et 3, avec une aile supérieure 210a (également appelée partie haute) et une aile inférieure 210b (également appelée partie basse) qui sont globalement horizontales et une partie centrale 210c globalement perpendiculaire au plan médian et s'étendant globalement verticalement parallèlement au plan YZ. Le panneau d'extrados 214 est fixé au-dessus de l'aile supérieure 210a du longeron 210 et le panneau d'intrados 216 est fixé au-dessous de l'aile inférieure 210b du longeron 210. La fixation du longeron avant 210 aux panneaux 214 et 216 est réalisée par tous moyens appropriés comme des soudures, des boulons, etc. Le panneau d'extrados 214 est ainsi fixé en partie haute du longeron avant 210 et le panneau d'intrados 216 est fixé en partie basse du longeron avant 210. La partie centrale 210c est au niveau du bord d'attaque de l'aile 104.

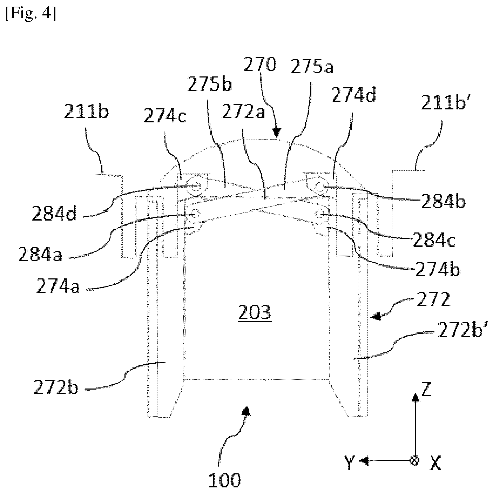

De sorte à permettre la fixation du mât réacteur 106 à l'aile 104, le longeron avant 210 porte une première ferrure 211a fixée au niveau du plan médian vertical XZ et plus particulièrement ici à la partie centrale 210c du longeron avant 210. Le panneau d'intrados 216 porte deux deuxièmes ferrures tribord 211b' et bâbord 211b (seule la deuxième ferrure bâbord est représentée sur les Figs. 2 et 3, la deuxième ferrure tribord est représentée sur la Fig. 4) qui sont fixées sur la face externe du panneau d'intrados 216 et dans l'alignement de la partie basse 210b du longeron avant 210. De plus, le panneau d'intrados 216 porte également une troisième ferrure 221 (visible sur la Fig. 3), qui est dans cet exemple, fixée sous l'intrados 216, sensiblement au niveau de la partie la plus basse de l'intrados 216. Dans cet exemple, la troisième ferrure 221 est positionnée à l'arrière des deuxièmes ferrures tribord 211b' et bâbord 211b.

L'ensemble 100 comporte en outre une embase de fixation 270 solidaire de la partie arrière de la structure primaire 202. L'embase de fixation 270 comporte dans cet exemple un corps 270a s'étendant verticalement dans le plan YZ. Plus précisément, le corps 270a présente une première partie de corps 272 se présentant sous la forme d'un U inversé ainsi qu'une deuxième partie de corps 271 se présentant également sous la forme d'un U inversé. La première partie de corps 272 et la deuxième partie de corps 271 s'étendent dans un plan vertical parallèle au plan vertical YZ et la première partie de corps 272 est arrangée à l'intérieur de la deuxième partie de corps 271.

Dans l'exemple illustré, la première partie de corps 272 comporte une paroi supérieure centrale 272a s'étendant horizontalement dans un plan parallèle au plan XY. La première partie de corps 272 comporte également deux parois latérales tribord 272b' et bâbord 272b (seule la paroi latérale bâbord est représentée sur les Figs. 2 et 3, la paroi latérale tribord est visible sur la Fig. 4) qui s'étendent perpendiculairement à partir de la paroi supérieure centrale 272a et qui s'étendent verticalement dans des plans parallèles au plan médian vertical XZ. La paroi supérieure centrale 272a et les parois latérales tribord 272b' et bâbord 272b sont solidaires et s'étendent autour et au-dessus de la partie arrière de la structure primaire 202 et forment un logement 273 de réception de la base 203 de la structure primaire 202. Les dimensions du logement 273 sont évidemment choisies pour correspondre aux dimensions de la base 203 de la structure primaire 202. On comprend que la structure primaire 202 est fixée au logement 273 par tous moyens appropriés comme des soudures, des boulons, etc. L'embase de fixation 270 comporte au moins une nervure 272c de renfort reliant les parois 272a, 272b, 272b' de la première partie de corps 272 à la deuxième partie de corps 271. Dans cet exemple, trois nervures 272c sont mises en œuvre (seules deux nervures sont visibles sur la Fig. 2) et s'étendent respectivement à partir de la paroi centrale supérieure 272a et des parois latérales tribord 272b' et bâbord 272b jusqu'à la deuxième partie de corps 271. Ces nervures 272c de renfort permettent notamment à l'embase de fixation 270 de supporter et transmettre les efforts provenant du système de propulsion 102 vers l'aile 104. Les nervures 272c fixent entre elles les parois 272a, 272b, 272b' de la première partie de corps 272 aux parois de la deuxième partie de corps 271.

De sorte à permettre la fixation du mât réacteur 106 à l'aile 104, la deuxième partie de corps 271 du corps 270a de l'embase de fixation 270 comporte deux premières chapes de fixation tribord et bâbord 273a (seule la première chape de fixation bâbord est représentée sur les Figs. 2 et 3) qui s'étendent à partir de la deuxième partie de corps 271 du corps 270a vers l'arrière et qui sont disposées en partie haute sur les côtés de l'embase de fixation 270. Chacune des premières chapes de fixation 273a est solidaire d'une des deuxièmes ferrures 211b, 211b' par une première liaison pivot 283a, en particulier une liaison pivot glissant.

Dans cet exemple, les premières chapes de fixation 273a et les deuxièmes ferrures 211b, 211b' comportent chacune un alésage dans lequel est enfilé un axe pour former la première liaison pivot 283a. Cette première liaison pivot 283a présente un axe de rotation sensiblement horizontal qui s'étend globalement parallèlement à la direction transversale Y.

La deuxième partie de corps 271 du corps 270a de l'embase de fixation 270 comporte également deux deuxièmes chapes de fixation tribord et bâbord 273b (seule la deuxième chape de fixation bâbord est représentée sur les Figs. 2 et 3) qui s'étendent à partir de la deuxième partie de corps 271 du corps 270a vers l'arrière et qui sont disposées en partie basse sur les côtés de l'embase de fixation 270. Les deux deuxièmes chapes de fixation 273b sont solidaires d'une manille 280 qui peut être triangulaire, respectivement par une première et une deuxième bielles 281a, 281b.

Dans cet exemple, la deuxième chape de fixation tribord est fixée à une deuxième extrémité de la première bielle 281a par le biais d'une deuxième liaison 283b, tandis que la deuxième chape de fixation bâbord 273b est fixée à une deuxième extrémité de la deuxième bielle 281b par le biais d'une autre deuxième liaison 283b. La deuxième liaison 283b présente au moins un degré de liberté en rotation selon un axe s'étendant ici sensiblement parallèlement à la direction transversale Y. Dans cet exemple, la deuxième liaison 283b est une liaison pivot dont l'axe s'étend globalement parallèlement à la direction transversale Y.

Dans une variante non illustrée, il serait envisageable de substituer la deuxième liaison 283b pivot par une liaison rotule.

Les premières extrémités des première 281a et deuxième 281b bielles sont respectivement fixées à la manille 280 par une troisième 283c et une quatrième 283d liaisons pivot. L'axe des troisième 283c et quatrième 283d liaisons pivot s'étend globalement parallèlement à la direction perpendiculaire au plan passant par les axes des première et deuxième bielles 281a, 281b. Dans cet exemple, les premières extrémités de chaque deux deuxièmes bielles 281a, 281b et la manille 280 comportent des alésages dans lesquels sont enfilés des axes pour former lesdites troisième 283c et quatrième 283d liaisons pivot.

En outre, la manille 280 est fixée par une cinquième liaison 283e à la troisième ferrure 221 de l'intrados 216. La cinquième liaison 283e présente au moins un degré de liberté en rotation selon un axe s'étendant ici sensiblement parallèlement à la direction verticale Z. Dans cet exemple, la cinquième liaison 283e est une liaison pivot dont l'axe s'étend globalement parallèlement à la direction perpendiculaire au plan passant par les axes des première et deuxième bielles 281a, 281b. Pour ce faire, la manille 280 et la troisième ferrure 221 présentent chacune un alésage dans lequel est enfilé un axe pour former la cinquième liaison pivot 283e.

Dans une variante non illustrée, il serait envisageable de substituer la cinquième liaison 283e pivot par une liaison rotule.

La deuxième partie de corps 271 du corps 270a de l'embase de fixation 270 comporte également au moins une troisième chape de fixation centrale 273c (une seule dans l'exemple illustré) qui s'étend à partir de la deuxième partie de corps 271 du corps 270a vers l'arrière et qui est disposée sensiblement de manière centrée (c'est-à-dire au niveau du plan médian vertical XZ) en partie haute de l'embase de fixation 270.

La troisième chape de fixation centrale 273c est fixée à la première ferrure 211a par une troisième bielle 282. Plus précisément, une première extrémité de la troisième bielle 282 est fixée à la première ferrure 211a par une septième liaison 283g et la deuxième extrémité de la troisième bielle 282 est fixée à la troisième chape de fixation centrale 273c par une sixième liaison 283f. Les sixième 283f et septième 283g liaisons présentent au moins un degré de liberté en rotation selon un axe s'étendant ici sensiblement parallèlement à la direction transversale Y. Dans cet exemple, les sixième 283f et septième 283g liaisons sont des liaisons pivot dont l'axe s'étend globalement parallèlement à la direction transversale Y.

Pour ce faire, la troisième bielle 282 comporte un alésage au niveau de chacune de ses extrémités dans chacune desquelles un axe est enfilé et coopère respectivement avec un alésage ménagé dans la troisième chape de fixation centrale 273c et dans la première ferrure 211a pour former les sixième 283f et septième 283g liaisons pivot.

Dans une variante non illustrée, il serait envisageable de substituer les sixième 283f et septième 283g liaisons pivot par des liaisons rotule.

Selon l'invention, la structure primaire 202 porte une quatrième ferrure tribord et une quatrième ferrure bâbord 301 (seule la quatrième ferrure bâbord est visible sur les Figs. 2 et 3). Les quatrièmes ferrures 301 sont fixées de part et d'autre de la structure primaire 202. Dans cet exemple, la quatrième ferrure tribord est fixée sur le panneau latéral tribord et la quatrième ferrure bâbord 301 est fixée sur le panneau latéral bâbord 208. De préférence, et comme illustré sur les Figs. 2 et 3, les quatrièmes ferrures 301 sont fixées en partie basse des panneaux latéraux 208 de sorte à optimiser la transmission des efforts provenant du système de propulsion 102 et transitant à travers le mât réacteur 106 vers l'aile 104.

La deuxième partie de corps 271 du corps 270a de l'embase de fixation 270 comporte en outre deux quatrièmes chapes de fixation tribord et bâbord 302 s'étendant à l'avant et en partie haute sur les côtés de ladite embase de fixation 270. Chacune des quatrièmes chapes de fixation 302 est fixée à une deuxième extrémité d'une quatrième bielle 303 par une neuvième liaison pivot 305. La deuxième extrémité de chaque quatrième bielle 303 est fixée à une quatrième ferrure 201 par une huitième liaison pivot 304.

L'axe des huitième 304 et neuvième 305 liaisons pivot est globalement parallèle à la direction transversale Y.

La mise en œuvre des quatrièmes ferrures 301, des quatrièmes chapes de fixation 302 et des quatrièmes bielles 303 permet de diminuer les dimensions de la structure primaire 202 du mât réacteur 106 tout en assurant un transfert optimisé des efforts provenant du système de propulsion 102 vers la structure de l'aile 104 grâce à ces chemins d'efforts additionnels. Par conséquent, la diminution des dimensions de la structure primaire 202 du mât réacteur 106 permet et facilite l'installation et la fixation de systèmes de propulsion de dimensions supérieures aux turboréacteurs actuellement fixés à l'aile de l'aéronef.

Comme illustré sur la Fig. 4, qui représente partiellement l'ensemble selon une vue de derrière, l'ensemble 100 comporte en outre un jeu de deux biellettes 275a, 275b permettant de réagir aux efforts provenant du système de propulsion 102 essentiellement selon la direction transversale Y. Dans cet exemple, l'embase de fixation 270 comporte au niveau de la première partie de corps 272, une première excroissance bâbord 274a et une première excroissance tribord 274b. Dans cet exemple, chaque première excroissance 274a, 274b présente une forme d'oreille et s'étend verticalement et perpendiculairement aux parois latérales 272b, 272b', c'est-à-dire dans un plan perpendiculaire au plan médian vertical XZ. Plus précisément, la première excroissance bâbord 274a s'étend sensiblement dans le coin entre la paroi supérieure centrale 272a et le panneau latéral bâbord 208 de la structure primaire 202 et la première excroissance tribord 274b s'étend sensiblement dans le coin entre la paroi supérieure centrale 272a et le panneau latéral tribord 208 de la structure primaire 202. Les premières excroissances 274a, 274b sont disposées en partie haute et en partie arrière de l'embase de fixation 270, c'est-à-dire à l'arrière de la structure primaire 202.

Les deuxièmes ferrures bâbord 211b et tribord 211b' portent respectivement une deuxième excroissance bâbord 274c et une deuxième excroissance tribord 274d. Dans cet exemple, chaque deuxième excroissance 274c, 274d présente également une forme d'oreille et s'étend verticalement dans un plan perpendiculaire au plan médian vertical XZ. Dans cet exemple, les deuxièmes excroissances 274c, 274d s'étendent en partie basse des deuxièmes ferrures 211b, 211b'.

Dans cet exemple, les premières excroissances 274a et 274b se font face. De la même manière, les deuxièmes excroissances 274c et 274d se font également face. Le jeu de biellettes 275a, 275b relie de manière croisée, les deuxièmes ferrures 211b, 211b' à l'embase de fixation 270. Plus précisément, une première biellette 275a relie la première excroissance bâbord 274a à la deuxième excroissance tribord 274d tandis que la deuxième biellette 275b relie la première excroissance tribord 274b à la deuxième excroissance bâbord 274c. Les première 275a et deuxième 275b biellettes sont donc croisées et s'étendent sensiblement dans deux plans parallèles perpendiculaires au plan médian vertical XZ. Les deux plans parallèles sont légèrement espacés pour favoriser le croisement des première 275a et deuxième 275b biellettes.

Les extrémités de la première biellette 275a sont solidarisées à la première excroissance bâbord 274a et à la deuxième excroissance tribord 274d respectivement par une dixième 284a et une onzième 284b liaisons pivot. Les extrémités de la deuxième biellette 275b sont solidarisées à la première excroissance tribord 274b et à la deuxième excroissance bâbord 274c respectivement par une douzième 284c et une treizième 284d liaisons pivot.

Plus précisément, la première biellette 275a est dite « engagée » tandis que la deuxième biellette 275b est dite « en attente ». Cela signifie que les axes de liaison des dixième 284a et onzième 284b liaisons pivot sont ajustés et réagissent donc aux efforts sous sollicitation, de sorte que la première biellette 275a représente le chemin d'effort dit « principal » pour la transmission des efforts ayant une composante sensiblement orientée selon la direction transversale Y.

Au moins l'une des douzième 284c et treizième 284d liaisons pivot présente un jeu qui permet en cas de rupture de la première biellette 275a, d'engager la deuxième biellette 275b de sorte que ce soit la deuxième biellette 275b qui réagissent aux efforts ayant une composante sensiblement orientée selon la direction transversale Y. La deuxième biellette 275b représente ainsi le chemin d'effort dit « secondaire ».

Par exemple, les douzième 284c et treizième 284d liaisons pivot présentent chacune un axe de liaison porté respectivement par la première excroissance tribord 274b et par la deuxième excroissance bâbord 274c. Au moins un des alésages ménagés aux extrémités de la deuxième biellette 275b et coopérant avec ces axes de liaison présente, par exemple, une forme oblongue de sorte que la deuxième biellette 275b soit montée avec un jeu au niveau d'au moins une des douzième 284c et treizième 284d liaisons pivot.

La mise en œuvre particulière de ce jeu de biellettes 275a, 275b permet encore de diminuer les dimensions de la structure primaire 202 du mât réacteur 106 tout en assurant un transfert optimisé des efforts provenant du système de propulsion 102 vers la structure de l'aile 104. L'embase de fixation 270 présente une hauteur H qui est mesurée entre la projection orthogonale de l'axe de la deuxième chape de fixation 273b et l'axe de la troisième chape de fixation 273c (c'est-à-dire verticalement selon la direction verticale Z) tandis que la largeur L est mesurée horizontalement (c'est-à-dire selon la direction transversale Y) entre les deux premières chapes de fixation 273a.

De préférence, et afin de compenser l'inertie plus faible de l'ensemble 100, la hauteur h de la structure primaire 202 est inférieure à la hauteur H de l'embase de fixation 270 et la largeur 1 de la structure primaire 202 est inférieure à la largeur L de l'embase de fixation 270.

De cette manière, le drainage des efforts transitant dans la structure primaire 202 vers l'embase de fixation 270 et les bielles/manilles associées est optimisé. En effet, la mise en œuvre d'une largeur L de l'embase de fixation 270 supérieure à la largeur 1 de la structure primaire 202 favorise la reprise du moment autour de l'axe vertical Z. De la même manière, la hauteur H de l'embase de fixation 270 étant supérieure à la hauteur h de la structure primaire 202, les points régissant les moments autour de l'axe latéral Y sont plus écartés. Ces deux conditions permettent d'optimiser les bras de levier engagés dans la reprise des moments. Cette disposition assure donc, localement, une inertie supérieure à celle de la structure primaire 202, permettant ainsi de limiter les dimensions de la structure primaire 202.

Il est ainsi possible de proposer une structure primaire 202 ayant un encombrement inférieur aux structures primaires des solutions de l'art antérieur.

La structure primaire 202 présente toutefois des dimensions standards au niveau de la pyramide avant 201 de la structure primaire 202 de sorte à assurer la compatibilité de l'ensemble 100 à la fixation de systèmes de propulsion actuellement mis en œuvre.

## Revendications

1. Ensemble (100) pour le montage sur un aéronef (10) d'un système de propulsion (102) présentant un plan médian vertical (XZ), ledit ensemble (100) comportant :
- une aile (104) avec un longeron avant (210), un panneau d'extrados (214) fixé en partie haute (210a) dudit longeron avant (210) et un panneau d'intrados (216) fixé en partie basse (210b) dudit longeron avant (210), où le longeron avant (210) porte une première ferrure (211a) au niveau du plan médian vertical (XZ), où ledit panneau d'intrados (216) porte deux deuxièmes ferrures tribord (211b') et bâbord (211b) au niveau de la partie basse (210b) dudit longeron avant (210), et où l'intrados (216) porte une troisième ferrure (221) positionnée à l'arrière desdites deuxièmes ferrures tribord (211b') et bâbord (211b),
- un mât réacteur (106) comportant une structure primaire (202),
- une manille (280) fixée par une cinquième liaison (283e) à ladite troisième ferrure (221) dudit intrados (216), ladite cinquième liaison (283e) présentant au moins un degré de liberté en rotation,
- une première et une deuxième bielles (281a, 281b), où une première extrémité de chaque première et deuxième bielles (281a, 281b) est fixée à la manille (280) respectivement par une troisième (283c) et une quatrième (283d) liaisons pivot,
- une troisième bielle (282), où une première extrémité est fixée à la première ferrure (211a) par une septième liaison (283g), ladite septième liaison (283g) présentant au moins un degré de liberté en rotation, et
- une embase de fixation (270) comportant un corps (270a) solidaire d'une partie arrière de la structure primaire (202),
ledit corps (270a) comportant deux premières chapes de fixation tribord et bâbord (273a) s'étendant à l'arrière et en partie haute sur les côtés de ladite embase de fixation (270), chacune desdites premières chapes de fixation (273a) étant fixée à une desdites deuxièmes ferrures (211b, 211b') par une première liaison pivot (283a),
ledit corps (270a) comportant aussi deux deuxièmes chapes de fixation tribord et bâbord (273b) s'étendant à l'arrière et en partie basse sur les côtés de ladite embase de fixation (270), chacune desdites deux deuxièmes chapes de fixation (273b) étant fixée par une deuxième liaison (283b) à une deuxième extrémité respectivement de la première et de la deuxième bielles (281a, 281b), ladite deuxième liaison (283b) présentant au moins un degré de liberté en rotation,
ledit corps (270a) comportant au moins une troisième chape de fixation centrale (273c) s'étendant à l'arrière et au niveau du plan médian vertical (XZ), ladite troisième chape de fixation centrale (273c) étant fixée à une deuxième extrémité de ladite troisième bielle (282) par une sixième liaison (283f), ladite sixième liaison (283f) présentant au moins un degré de liberté en rotation, l'ensemble (100) comportant une quatrième ferrure tribord et une quatrième ferrure bâbord (301), chacune desdites quatrièmes ferrures (301) étant fixée à la structure primaire (202) dudit mât réacteur (160),
pour chaque quatrième ferrure (301), l'ensemble (100) comportant une quatrième bielle (303) dont une première extrémité est fixée à ladite quatrième ferrure (301) par une huitième liaison pivot (304), ledit corps (270a) comportant en outre deux quatrièmes chapes de fixation tribord et bâbord (302) s'étendant à l'avant et en partie basse sur les côtés de ladite embase de fixation (270), chacune desdites quatrièmes chapes de fixation (302) étant fixée à une deuxième extrémité d'une quatrième bielle (303) par une neuvième liaison pivot (305).

2. Ensemble (100) selon la revendication 1, ladite structure primaire (202) comportant en outre un longeron supérieur (204), un longeron inférieur (206) et deux panneaux latéraux (208) tribord et bâbord reliant les deux longerons (204, 206), lesdites quatrièmes ferrures (301) étant fixées de part et d'autre de ladite structure primaire (202) en partie basse desdits panneaux latéraux (208).

3. Ensemble (100) selon la revendication 1 ou 2, où ledit corps (270a) comporte une première partie de corps (272) en forme de U inversé s'étendant à l'intérieur d'une deuxième partie de corps (271) en forme de U inversé, où la partie arrière de la structure primaire (202) est fixée dans la première partie de corps (272), et où les deux premières chapes de fixation (273a), les deux deuxièmes chapes de fixation (273b) et les deux quatrièmes chapes de fixation (302) sont solidaires de la deuxième partie de corps (271).

4. Ensemble (100) selon la revendication 3, où ledit corps (270a) comporte au moins au moins une nervure (272c) de renfort reliant ladite première partie de corps (272) et ladite deuxième partie de corps (271).

5. Ensemble (100) selon la revendication 3, où ladite partie arrière de la structure primaire (202) solidaire de ladite embase de fixation (270) présente une hauteur (h) mesurée selon la direction verticale (Z) entre lesdits longerons supérieur (204) et inférieur (206) et une largeur (1) mesurée selon la direction transversale (Y) entre lesdits panneaux latéraux (208), et en ce que ladite embase de fixation (270) présente une hauteur (H) mesurée entre la projection orthogonale d'un axe d'une deuxième liaison (283b) de ladite deuxième chape de fixation (273b) et un axe d'une sixième liaison (283f) de ladite troisième chape de fixation (273c) et une largeur (L) mesurée selon la direction transversale (Y) entre lesdites deux premières chapes de fixation (273a), la hauteur (h) de ladite structure primaire (202) étant inférieure à la hauteur (H) de ladite embase de fixation (270) et la largeur (1) de ladite structure primaire (202) étant inférieure à la largeur (L) de ladite embase de fixation (270).

6. Ensemble (100) selon l'une quelconque des revendications 3 à 5, où
ladite première partie de corps (272) de ladite embase de fixation (270) comporte une première excroissance bâbord (274a) et une première excroissance tribord (274b) s'étendant verticalement dans un plan globalement perpendiculaire au plan médian vertical (XZ), lesdites premières excroissances (274a, 274b) étant disposées de part et d'autre de ladite structure primaire (202) en partie haute desdits panneaux latéraux (208),
pour la première excroissance bâbord (274a), l'ensemble (100) comporte une première biellette (275a) dont une première extrémité est fixée à ladite première excroissance (274a) par une dixième liaison pivot (284a),
pour la première excroissance tribord (274b), l'ensemble (100) comporte une deuxième biellette (275b) dont une première extrémité est fixée à ladite première excroissance tribord (274b) par une onzième liaison pivot (284b),
et en ce que lesdites deuxièmes ferrures bâbord (211b) et tribord (211b') comportent respectivement une deuxième excroissance bâbord (274c) et une deuxième excroissance tribord (274d) s'étendant verticalement dans un plan globalement perpendiculaire au plan médian vertical (XZ), lesdites deuxièmes excroissances (274c, 274d) s'étendant en partie basse des deuxièmes ferrures (211b, 211b'), la deuxième excroissance tribord (274d) étant fixée à une deuxième extrémité de ladite première biellette (275a) par une onzième liaison pivot (284b) et ladite deuxième excroissance bâbord (274c) étant fixée à une deuxième extrémité de ladite deuxième biellette (275b) par une onzième liaison pivot (284b).

7. Ensemble (100) selon la revendication 6, où lesdites dixième (284a) et onzième (284b) liaisons pivot présentent un axe de liaison ajusté et en ce qu'au moins une desdites douzième (284c) et treizième (284d) liaisons pivot présente un jeu.

8. Ensemble (100) selon la revendication 1, où lesdites deuxième (283b), quatrième (283e), cinquième (283f) et sixième (283g) liaisons sont des liaisons pivot ou des liaisons rotule.

9. Aéronef (10) comportant un système de propulsion (102) et un ensemble (100) selon l'une quelconque des revendications 1 à 8, où le système de propulsion (102) est fixé au mât réacteur (106).

## Patentansprüche

1. Anordnung (100) zur Montage, an einem Flugzeug (10), eines Antriebssystems (102), das eine vertikale Mittelebene (XZ) aufweist, wobei die Anordnung (100) Folgendes umfasst:
- eine Tragfläche (104) mit einem Vorderholm (210), einer Oberseitenplatte (214), die am oberen Teil (210a) des Vorderholms (210) befestigt ist, und einer Unterseitenplatte (216), die am unteren Teil (210b) des Vorderholms (210) befestigt ist, wobei der Vorderholm (210) einen ersten Beschlag (211a) im Bereich der vertikalen Mittelebene (XZ) trägt, wobei die Unterseitenplatte (216) zwei zweite Beschläge, einen steuerbordseitigen (211b') und einen backbordseitigen (211b), im Bereich des unteren Teils (210b) des Vorderholms (210) trägt und wobei die Unterseite (216) einen dritten Beschlag (221) trägt, der hinter den zweiten Beschlägen, dem steuerbordseitigen (211b') und dem backbordseitigen (211b), positioniert ist,
- einen Triebwerkspylon (106), der eine Primärstruktur (202) umfasst,
- einen Bügel (280), der durch eine fünfte Verbindung (283e) an dem dritten Beschlag (221) der Unterseite (216) befestigt ist, wobei die fünfte Verbindung (283e) mindestens einen Drehfreiheitsgrad aufweist,
- eine erste und eine zweite Verbindungsstange (281a, 281b), wobei ein erstes Ende jeder ersten und zweiten Verbindungsstange (281a, 281b) durch eine dritte (283c) bzw. eine vierte (283d) Schwenkverbindung an dem Bügel (280) befestigt ist,
- eine dritte Verbindungsstange (282), wobei ein erstes Ende durch eine siebte Verbindung (283g) an dem ersten Beschlag (211a) befestigt ist, wobei die siebte Verbindung (283g) mindestens einen Drehfreiheitsgrad aufweist, und
- eine Befestigungsbasis (270), die einen Körper (270a) umfasst, der mit einem hinteren Teil der Primärstruktur (202) fest verbunden ist,
wobei der Körper (270a) zwei erste Befestigungshalterungen (273a), eine steuerbordseitige und eine backbordseitige, umfasst, die sich hinten und oben an den Seiten der Befestigungsbasis (270) erstrecken, wobei jede der ersten Befestigungshalterungen (273a) durch eine erste Schwenkverbindung (283a) an einem der zweiten Beschläge (211b, 211b') befestigt ist,
wobei der Körper (270a) auch zwei zweite Befestigungshalterungen (273b), eine steuerbordseitige und eine backbordseitige, umfasst, die sich hinten und unten an den Seiten der Befestigungsbasis (270) erstrecken, wobei jede der zwei zweiten Befestigungshalterungen (273b) durch eine zweite Verbindung (283b) an einem zweiten Ende der ersten bzw. der zweiten Verbindungsstange (281a, 281b) befestigt ist, wobei die zweite Verbindung (283b) mindestens einen Drehfreiheitsgrad aufweist,
wobei der Körper (270a) mindestens eine dritte mittige Befestigungshalterung (273c) umfasst, die sich hinten und im Bereich der vertikalen Mittelebene (XZ) erstreckt, wobei die dritte mittige Befestigungshalterung (273c) durch eine sechste Verbindung (283f) an einem zweiten Ende der dritten Verbindungsstange (282) befestigt ist, wobei die sechste Verbindung (283f) mindestens einen Drehfreiheitsgrad aufweist,
wobei die Anordnung (100) einen vierten steuerbordseitigen Beschlag und einen vierten backbordseitigen Beschlag (301) umfasst, wobei jeder der vierten Beschläge (301) an der Primärstruktur (202) des Triebwerkspylons (160) befestigt ist,
wobei die Anordnung (100) für jeden vierten Beschlag (301) eine vierte Verbindungsstange (303) umfasst, von der ein erstes Ende durch eine achte Schwenkverbindung (304) an dem vierten Beschlag (301) befestigt ist,
wobei der Körper (270a) ferner zwei vierte Befestigungshalterungen (302), eine steuerbordseitige und eine backbordseitige, umfasst, die sich vorne und unten an den Seiten der Befestigungsbasis (270) erstrecken, wobei jede der vierten Befestigungshalterungen (302) durch eine neunte Schwenkverbindung (305) an einem zweiten Ende einer vierten Verbindungsstange (303) befestigt ist.

2. Anordnung (100) nach Anspruch 1, wobei die Primärstruktur (202) ferner einen oberen Holm (204), einen unteren Holm (206) und zwei Seitenplatten (208), eine steuerbordseitige und eine backbordseitige, die die zwei Holme (204, 206) verbinden, umfasst, wobei die vierten Beschläge (301) auf beiden Seiten der Primärstruktur (202) unten an den Seitenplatten (208) befestigt sind.

3. Anordnung (100) nach Anspruch 1 oder 2, wobei der Körper (270a) einen ersten umgekehrt U-förmigen Körperteil (272) umfasst, der sich innerhalb eines zweiten umgekehrt U-förmigen Körperteils (271) erstreckt, wobei der hintere Teil der Primärstruktur (202) in dem ersten Körperteil (272) befestigt ist und wobei die zwei ersten Befestigungshalterungen (273a), die zwei zweiten Befestigungshalterungen (273b) und die zwei vierten Befestigungshalterungen (302) mit dem zweiten Körperteil (271) fest verbunden sind.

4. Anordnung (100) nach Anspruch 3, wobei der Körper (270a) mindestens eine Verstärkungsrippe (272c) umfasst, die den ersten Körperteil (272) und den zweiten Körperteil (271) verbindet.

5. Anordnung (100) nach Anspruch 3, wobei der hintere Teil der Primärstruktur (202), der mit der Befestigungsbasis (270) fest verbunden ist, eine Höhe (h), gemessen entlang der vertikalen Richtung (Z) zwischen dem oberen (204) und dem unteren (206) Holm, und eine Breite (1), gemessen entlang der Querrichtung (Y) zwischen den Seitenplatten (208), aufweist und dass die Befestigungsbasis (270) eine Höhe (H), gemessen zwischen der orthogonalen Projektion einer Achse einer zweiten Verbindung (283b) der zweiten Befestigungshalterung (273b) und einer Achse einer sechsten Verbindung (283f) der dritten Befestigungshalterung (273c), und eine Breite (L), gemessen entlang der Querrichtung (Y) zwischen den zwei ersten Befestigungshalterungen (273a), aufweist, wobei die Höhe (h) der Primärstruktur (202) kleiner als die Höhe (H) der Befestigungsbasis (270) ist und die Breite (1) der Primärstruktur (202) kleiner als die Breite (L) der Befestigungsbasis (270) ist.

6. Anordnung (100) nach einem der Ansprüche 3 bis 5, wobei der erste Körperteil (272) der Befestigungsbasis (270) einen ersten backbordseitigen Vorsprung (274a) und einen ersten steuerbordseitigen Vorsprung (274b) umfasst, die sich in einer zu der vertikalen Mittelebene (XZ) im Wesentlichen senkrechten Ebene vertikal erstrecken, wobei die ersten Vorsprünge (274a, 274b) auf beiden Seiten der Primärstruktur (202) oben an den Seitenplatten (208) angeordnet sind,
wobei die Anordnung (100) für den ersten backbordseitigen Vorsprung (274a) eine erste Stange (275a) umfasst, von der ein erstes Ende durch eine zehnte Schwenkverbindung (284a) an dem ersten Vorsprung (274a) befestigt ist,
wobei die Anordnung (100) für den ersten steuerbordseitigen Vorsprung (274b) eine zweite Stange (275b) umfasst, von der ein erstes Ende durch eine elfte Schwenkverbindung (284b) an dem ersten steuerbordseitigen Vorsprung (274b) befestigt ist,
und dass die zweiten Beschläge, der backbordseitige (211b) und der steuerbordseitige (211b'), einen zweiten backbordseitigen Vorsprung (274c) bzw. einen zweiten steuerbordseitigen Vorsprung (274d) umfassen, die sich in einer zu der vertikalen Mittelebene (XZ) im Wesentlichen senkrechten Ebene vertikal erstrecken, wobei sich die zweiten Vorsprünge (274c, 274d) unten an den zweiten Beschlägen (211b, 211b') erstrecken, wobei der zweite steuerbordseitige Vorsprung (274d) durch eine elfte Schwenkverbindung (284b) an einem zweiten Ende der ersten Stange (275a) befestigt ist und der zweite backbordseitige Vorsprung (274c) durch eine elfte Schwenkverbindung (284b) an einem zweiten Ende der zweiten Stange (275b) befestigt ist.

7. Anordnung (100) nach Anspruch 6, wobei die zehnte (284a) und die elfte (284b) Schwenkverbindung eine justierte Verbindungsachse aufweisen und dass mindestens eine der zwölften (284c) und der dreizehnten (284d) Schwenkverbindung ein Spiel aufweist.

8. Anordnung (100) nach Anspruch 1, wobei die zweite (283b), vierte (283e), fünfte (283f) und sechste (283g) Verbindung Schwenkverbindungen oder Gelenkverbindungen sind.

9. Flugzeug (10), das ein Antriebssystem (102) und eine Anordnung (100) nach einem der Ansprüche 1 bis 8 umfasst, wobei das Antriebssystem (102) an dem Triebwerkspylon (106) befestigt ist.

## Claims

1. Assembly (100) for the mounting on an aircraft (10) of a propulsion system (102) having a vertical median plane (XZ), said assembly (100) having:
- a wing (104) with a front spar (210), a suction-side panel (214) fastened in the top part (210a) of said front spar (210) and a pressure-side panel (216) fastened in the bottom part (210b) of said front spar (210), wherein the front spar (210) bears a first fitting (211a) at the vertical median plane (XZ), wherein said pressure-side panel (216) bears two starboard-side (211b') and port-side (211b) second fittings at the bottom part (210b) of said front spar (210), and wherein the pressure side (216) bears a third fitting (221) positioned at the rear of said starboard-side (211b') and port-side (211b) second fittings,
- an engine pylon (106) having a primary structure (202),
- a shackle (280) fastened by a fifth connection (283e) to said third fitting (221) of said pressure side (216), said fifth connection (283e) having at least one degree of freedom in rotation,
- a first and a second rod (281a, 281b), wherein a first end of each first and second rod (281a, 281b) is fastened to the shackle (280) respectively by a third (283c) and a fourth (283d) pivot connection,
- a third rod (282), wherein a first end is fastened to the first fitting (211a) by a seventh connection (283g), said seventh connection (283g) having at least one degree of freedom in rotation, and
- a fastening base (270) having a body (270a) as one with a rear part of the primary structure (202),
said body (270a) having two starboard-side and port-side first fastening yokes (273a) extending to the rear and in the top part on the sides of said fastening base (270), each of said first fastening yokes (273a) being fastened to one of said second fittings (211b, 211b') by a first pivot connection (283a),
said body (270a) also having two starboard-side and port-side second fastening yokes (273b) extending to the rear and in the bottom part on the sides of said fastening base (270), each of said two second fastening yokes (273b) being fastened by a second connection (283b) to a second end respectively of the first and of the second rods (281a, 281b), said second connection (283b) having at least one degree of freedom in rotation,
said body (270a) having at least one central third fastening yoke (273c) extending to the rear and at the vertical median plane (XZ), said third central fastening yoke (273c) being fastened to a second end of said third rod (282) by a sixth connection (283f), said sixth connection (283f) having at least one degree of freedom in rotation,
the assembly (100) having a starboard-side fourth fitting and a port-side fourth fitting (301), each of said fourth fittings (301) being fastened to the primary structure (202) of said engine pylon (160),
for each fourth fitting (301), the assembly (100) having a fourth rod (303) of which a first end is fastened to said fourth fitting (301) by an eighth pivot connection (304),
said body (270a) also having two starboard-side and port-side fourth fastening yokes (302) extending to the front and in the bottom part on the sides of said fastening base (270), each of said fourth fastening yokes (302) being fastened to a second end of a fourth rod (303) by a ninth pivot connection (305).

2. Assembly (100) according to Claim 1, said primary structure (202) also having an upper spar (204), a lower spar (206) and two starboard-side and port-side lateral panels (208) connecting the two spars (204, 206), said fourth fittings (301) being fastened on either side of said primary structure (202) in the bottom part of said lateral panels (208).

3. Assembly (100) according to Claim 1 or **2,** wherein said body (270a) has a first body part (272) in the form of an inverted U extending inside a second body part (271) in the form of an inverted U, wherein the rear part of the primary structure (202) is fastened in the first body part (272), and wherein the two first fastening yokes (273a), the two second fastening yokes (273b) and the two fourth fastening yokes (302) are as one with the second body part (271).

4. Assembly (100) according to Claim 3, wherein said body (270a) has at least one reinforcing rib (272c) connecting said first body part (272) and said second body part (271).

5. Assembly (100) according to Claim 3, wherein said rear part of the primary structure (202) as one with said fastening base (270) has a height (h) measured in the vertical direction (Z) between said upper (204) and lower (206) spars and a width (1) measured in the transverse direction (Y) between said lateral panels (208), and in that said fastening base (270) has a height (H) measured between the orthogonal projection of an axis of a second connection (283b) of said second fastening yoke (273b) and an axis of a sixth connection (283f) of said third fastening yoke (273c) and a width (L) measured in the transverse direction (Y) between said two first fastening yokes (273a), the height (h) of said primary structure (202) being less than the height (H) of said fastening base (270) and the width (1) of said primary structure (202) being less than the width (L) of said fastening base (270).

6. Assembly (100) according to any one of Claims 3 to 5, wherein said first body part (272) of said fastening base (270) has a port-side first protuberance (274a) and a starboard-side first protuberance (274b) extending vertically in a plane generally perpendicular to the vertical median plane (XZ), said first protuberances (274a, 274b) being disposed on either side of said primary structure (202) in the top part of said lateral panels (208),
for the port-side first protuberance (274a), the assembly (100) has a first connecting rod (275a) of which a first end is fastened to said first protuberance (274a) by a tenth pivot connection (284a),
for the starboard-side first protuberance (274b), the assembly (100) has a second connecting rod (275b) of which a first end is fastened to said starboard-side first protuberance (274b) by an eleventh pivot connection (284b),
and in that said port-side (211b) and starboard-side (211b') second fittings respectively have a port-side second protuberance (274c) and a starboard-side second protuberance (274d) extending vertically in a plane generally perpendicular to the vertical median plane (XZ), said second protuberances (274c, 274d) extending in the bottom part of the second fittings (211b, 211b'), the starboard-side second protuberance (274d) being fastened to a second end of said first connecting rod (275a) by an eleventh pivot connection (284b) and said port-side second protuberance (274c) being fastened to a second end of said second connecting rod (275b) by an eleventh pivot connection (284b).

7. Assembly (100) according to Claim 6, wherein said tenth (284a) and eleventh (284b) pivot connections have a fitted connection pin and in that at least one of said twelfth (284c) and thirteenth (284d) pivot connections has a clearance.

8. Assembly (100) according to Claim 1, wherein said second (283b), fourth (283e), fifth (283f) and sixth (283g) connections are pivot connections or ball joint connections.

9. Aircraft (10) having a propulsion system (102) and an assembly (100) according to any one of Claims 1 to 8, wherein the propulsion system (102) is fastened to the engine pylon (106).
